# EUROPÄISCHE PATENTSCHRIFT

(11) **EP 3 591 082 B1**
(45) Veröffentlichungstag und Bekanntmachung des Hinweises auf die Patenterteilung: **25.11.2020**
(21) Anmeldenummer: 18181573.9
(22) Anmeldetag: 04.07.2018
(51) Int. Cl.: C22B 3/00, C25C 1/20, C25C 7/00

(54) **AUTOKLAV-ELEKTROLYSEBEHÄLTER FÜR DIE PLANTINOID-METALLGEWINNUNG**
AUTOCLAVE ELECTROLYSIS CONTAINERS FOR THE OBTAINING PLANTINOID METAL
RÉCIPIENT D'ÉLECTROLYSE AUTOCLAVE DESTINÉ À LA RÉCUPÉRATION DES PLANTINOÏDES

(43) Veröffentlichungstag der Anmeldung: 08.01.2020
(73) Patentinhaber: ReMetall Deutschland AG, 01994 Drochow (DE)
(72) Erfinder: Antonov, Andrey, 121357 Moscow (RU); Tietz, Andreas, Folkestone, CT20 15Q (GB)
(74) Vertreter: Jeck, Anton

(56) Entgegenhaltungen:
- RU-A- 2016 104 530
- RU-C1- 2 540 251
- US-A- 4 406 753
- US-A- 4 530 748
- JANA R K ET AL: "ELECTROWINNING OF METAS USING BUFFERED SODIUM CHLORIDE ELECTROLYTE DURING ELECTROCHLORINATION OF SEA NODULES", HYDROMETALLURGY, ELSEVIER SCIENTIFIC PUBLISHING CY. AMSTERDAM, NL, Bd. 36, Nr. 3, 1. Oktober 1994 (1994-10-01), Seiten 295-314, XP000491383, ISSN: 0304-386X, DOI: 10.1016/0304-386X(94)90028-0
- PALANT, A.A. ET AL: "Complex Electrochemical Processing of the Metallic Wastes from a Rhenium-Containing Superalloy in Sulfuric Acid Electrolytes", RUSSIAN METALLURGY, Bd. 2011, Nr. 6, 2011, Seiten 589-593, XP002785342,

## Beschreibung

Die Erfindung bezieht sich auf die Bauart eines Elektrolysebehälters für die effektive Gewinnung von Platingruppen-Metallen (PGM) aus verbrauchten Katalysatoren und anderen Stoffen, die Edelmetalle enthalten.

Es sind Laboranlagen für die elektrochemische PGM-Gewinnung aus verbrauchten Katalysatoren bekannt, in denen die Chlorerzeugung in einem separaten Elektrolysebehälter erfolgt [1, 2]. Danach gelangt das Chlor in einen separaten Reaktor mit einem eingelegten Katalysator-Muster für das PGM-Auslaugen. Es wird mit einem Mischer eingerührt. Der Hauptnachteil dieser Anlage ist, dass die Verwendung des aktiven, atomaren Chlors unmöglich ist. Atomares Chlor, das im Elektrolysebehälter erzeugt wurde, wird beim Auslaugen in dem separaten Reaktor zu molekularem Chlor rekombiniert. Dadurch werden die Kinetik des Vorgangs und der Prozentsatz der PGM-Gewinnung vermindert. Außerdem ist eine Vermischung des Rohstoffs beim Auslaugen bei einem erhöhten Verhältnis Flüssig/Fest möglich. Das führt zu einer unerwünschten Volumenvergrößerung der Lösungen. Im Ergebnis ergibt sich in der Anlage eine Lösung, die PGM enthält, die zusätzlich einer Gewinnung dieser Metalle zugeführt werden soll.

ISSN: 0304-386X by R. K. Jana relates to electrowinning of metals using buffered sodium chloride electrolyte during electro chlorination of sea nodules. The publication shows the effect of acetic acid and formic acid addition to sodium chloride electrolyte for the electrowinning of metals from sea nodules.

Es ist ein industrielles Elektrochlorgerät (Kapazität 200dm³, Leistungsvermögen 20kg/Tag) für die Auflösung der angereicherten Platin-Konzentrate bekannt [3]. Diese Konstruktion wie auch die oben angegebene ermöglicht die Platin-Auflösung nur mit aktivem Chlor, aber die Herauslösung des Platins wird nicht vorgesehen. Dafür ist eine zusätzliche Verfahrensstufe erforderlich. In den Abgasen ist HCl enthalten, das teilweise in den Anodenraum durch den Rückflusskühler zurückkehrt. Der Gasdurchbruch wird entsorgt. Das chlorreiche Anolyt wird mit einem Turbinenmischer vermischt. Die Wirksamkeit dieses Verarbeitungsvorgangs der Katalysatoren wird aber erst bei einer Leistungsfähigkeit der Einrichtung von mindestens 1000kg/Tag erreicht. Demzufolge beansprucht die Vermischung des Rohstoffs einen vermehrten Verbrauch an Salzsäurelösung und verursacht einen vermehrten Anfall von Abfalllösungen für die Entsorgung.

Es ist ein industrielles Elektrochlorgerät (Kapazität 200dm³, Leistungsvermögen 20kg/Tag) für die Auflösung der angereicherten Platin-Konzentrate bekannt [3]. Diese Konstruktion wie auch die oben angegebene ermöglicht die Platin-Auflösung nur mit aktivem Chlor, aber die Herauslösung des Platins wird nicht vorgesehen. Dafür ist eine zusätzliche Verfahrensstufe erforderlich. In den Abgasen ist HCl enthalten, das teilweise durch den Rückflusskühler in den Anodenraum zurückkehrt. Der Gasdurchbruch wird entsorgt. Das chlorreiche Anolyt wird mit einem Turbinenmischer vermischt. Die Wirksamkeit dieses Verarbeitungsvorgangs der Katalysatoren wird aber erst bei einer Leistungsfähigkeit der Einrichtung von mindestens 1000kg/Tag erreicht. Demzufolge beansprucht die Vermischung des Rohstoffs einen vermehrten Verbrauch an Salzsäurelösung und verursacht einen vermehrten Anfall von Abfalllösungen für die Entsorgung.

Es ist eine Laboranlage (Auslastung bis 1.6kg) für die PGM-Gewinnung aus Katalysatoren bekannt, in der die Verarbeitung des Rohstoffs (Erzeugung des aktiven Chlors und elektrochemische Abscheidung des PGM aus der Lösung) im gleichen Elektrolysebehälter verläuft. Die Hydrochlorierung und das Auslaugen des Rohstoffs verlaufen in einem separaten Reaktor [4]. Dabei zirkuliert der Elektrolyt durch die eine Filtersäule, eine Heizvorrichtung, und der Rohstoff wird mit einem Mischer im Reaktor für das Auslaugen vermischt. Diese Anlage hat ebenfalls die oben angeführten Nachteile und ist wenig effektiv für den industriellen Einsatz.

Die der Konstruktion nächstliegende Lösung der gestellten Aufgabe ist ein industrieller Elektrolysebehälter für die Gewinnung von Gold aus Erz, der unter [5] beschrieben ist (S. 120 Abb. 47, 48). Das Elektrolysebad hat eine Zylinderform mit vertikal stehenden Elektroden, eine kathodische Scheidewand und eine mechanische Einrichtung im Anodenraum zur Vermischung des Anolyts, das aus einer Mischung von festen und flüssigen Phasen besteht. Die Kathode des Bads hat eine Zylinderform und ist aus perforiertem Eisen gefertigt. Sie ist in den Boden des Bads hineingesteckt und stemmt sich gegen den Deckel. Die Zylinderanode ist in der Mitte des Bads platziert und besteht aus Graphitplatten, die miteinander verbunden sind. Die mechanische Vermischung der Suspension erfolgt durch den Mischer, der auf einer Welle befestigt ist, die durch die Mitte des Bads läuft. Die Suspension wird in den Anolytraum angeliefert, danach gelangt sie in die Kathodenzone, in der die elektrochemische Abscheidung des aufgelösten Goldes erfolgt. Die angebotene Bauart setzt das Durchpumpen der Suspension und deren Vermischung voraus. Das führt bei dem feindispersen Rohstoff zu einem Verstopfen von Membranen, der Pumpen und zu einem erhöhten Verhältnis Flüssig/Fest. In der Konstruktion ist keine Vorheizung der Suspension vorgesehen. Außerdem wird eine Goldgewinnung in diesem Gerät in Höhe von 80-90% erreicht.

Das technische Ergebnis der Erfindung liegt in der Entwicklung eines Autoklav-Elektrolysebehälters, durch den ermöglicht wird, in einer Anlage die Lösung der Platinmetalle aus der Oberfläche des Rohstoffs durchzuführen und gleichzeitig das Aufbereitungskonzentrat der Platinmetalle an der Kathode abzuscheiden sowie auch die Elektrolyseregeneration durchzuführen. Damit wird die Leistungsfähigkeit des Ausscheidungsverfahrens der hochkonzentrierten Platinmetalle erhöht, die Dauer des Verfahrens verkürzt und der Prozentsatz der gewonnenen Platinmetalle erhöht. Die schädliche Umweltbeeinflussung durch das Verfahren wird dabei auf ein Minimum reduziert.

Erfindungsgemäß wird ein Autoklav-Elektrolysebehälter für die Platingruppen-Metallgewinnung aus verbrauchten Katalysatoren und anderen Recyclingteilen, die Edelmetalle enthalten beansprucht, mit einem Metallgehäuse, in welchem eine koaxial positionierte perforierte Zylinderkathode in einer Kathodenkassette mit einer Membran angeordnet ist, dadurch gekennzeichnet, dass das Metallgehäuses eine Außenfläche aufweist, welche mit einer wärme- und spannungsisolierten Ummantelung ausgebildet ist, dass auf der Innenfläche des Metallgehäuses Gleichstrom-Anoden angeordnet sind, die gleichzeitig als Schutzanoden dienen, dass gleichzeitig auf der Innenfläche des Metallgehäuses isolierte Wechselstromelektroden paarweise platziert sind, die isoliert, vorzugsweise durch gegenüber dem Metallgehäuse isolierten und abgedichtete Kontaktblöcke mit der unabhängigen Wechselstromquelle verbunden sind, und dass ein oberer, vom Metallgehäuse isolierter Bereich des Autoklav-Elektrolysebehälters, ein vom Metallgehäuse stromisolierte Oberdeckel, ein Ventil aufweist, das durch Stutzen mit einem absteigenden Kühler für eine Destillation und Kondensation des Elektrolyten mit einem Speicherraum für den Elektrolyten verbunden ist.

Es wird eine Bauart des Autoklav-Elektrolysebehälters angeboten, die dadurch gekennzeichnet ist, dass die Außenfläche des Metallgehäuses des Autoklavs eine wärme- und spannungsisolierte Ummantelung aufweist und dass die Innenfläche des Gehäuses als Gleichstrom-Anode dient, da auf ihr Titanplatten mit einer Beschichtung aus Ruthenium- und/oder Titan- und/oder Iridium-Oxiden befestigt sind. Diese Anoden gewährleisten auch einen Korrosionsschutz des Gehäuses. Gleichzeitig sind auf der Innenfläche des Gehäuses isolierte Elektroden platziert, die durch einen vom Gehäuse isolierten und abgedichtete Kontaktblöcke mit der unabhängigen Wechselstromquelle verbunden sind. Der vom Gehäuse stromisolierte Oberdeckel hat ein Ventil, das durch Stutzen mit dem absteigenden Kühler für die Destillation und Kondensation des Elektrolyten im Speicherraum verbunden ist. Außerdem ist jedes Paar der Wechselstromelektroden vertikal nach der Mantellinie diametral gegeneinander angeordnet. Aus der Anzahl der Paare der Wechselstromelektroden werden höchstens zwei Paare ausgewählt.

Jedes Paar der Schutzanoden (Gleichstrom-Anoden) ist vertikal diametral zueinander zwischen Wechselstromelektroden angeordnet, und die Anzahl der ausgewählten Paare der Schutzanoden beträgt vorzugsweise nicht mehr als zwei.

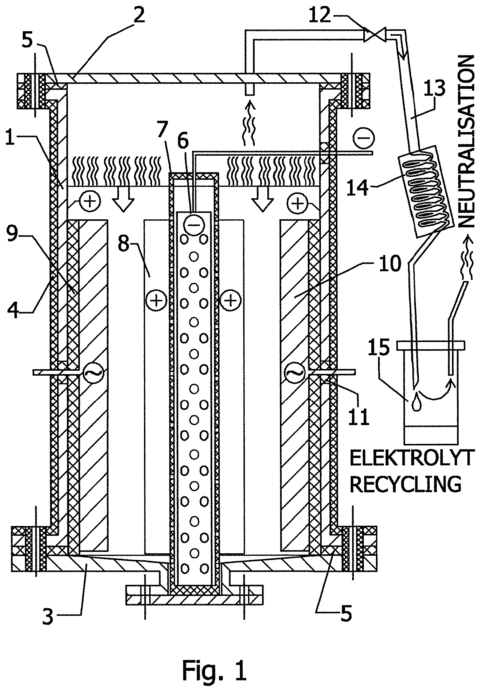

In Fig. 1 ist eine der möglichen Ausführungsvarianten der Anlage mit einem Paar Wechselstromelektroden und mit zwei Anodenplatten dargestellt.

Die Anlage kann ein, vorzugsweise zylindrischen, Metallgehäuse 1, einen Oberdeckel 2 und einem Unterdeckel 3 aufweisen, welche jeweils aus säurefestem Material gebildet sein können. Auf der Außenfläche des Gehäuses und der Deckel kann eine wärme- und spannungsisolierte Beschichtung 4 aufgebracht sein. Das Gehäuse ist von den Deckeln, vorzugsweise durch Dichtungen 5, spannungsisoliert. In der Mitte ist eine perforierte Zylinderkathode (Zentralkathode) 6 in der Kathodenkassette mit einer Membran 7 platziert. Auf der Innenfläche des Gehäuses liegen Titananodenplatten mit einer Beschichtung aus Ruthenium- und/oder Titan- und/oder Iridium-Oxiden 8. Ebenfalls auf der Innenfläche des Gehäuses auf Elektroisolatoren 9 sind Wechselstromelektroden 10 platziert. Die Elektroden 10 sind durch einen vom Gehäuse 1 isolierten und abgedichteten Kontaktblock 11 mit einer separaten Wechselstromquelle verbunden. Am Oberdeckel 2 ist ein Ventil 12 platziert, das durch Stutzen 13 mit einem absteigenden Kühler 14 und mit einem Speicherraum 15 verbunden ist.

Sind mehrere Paare von Wechselstromelektroden vorgesehen, kann jedes Paar über eine separate Wechselstromquelle mit elektrischer Energie versorgt sein.
Die in Figur 1 dargestellten Anode 8 befindet sich hinter der Zeichnungsebene und steht ebenfalls mit der Gehäuseinnenfläche 1 in Kontakt. Entgegen des ersten Eindrucks von Figur 1 stehen die Anode 8 hingegen nicht mit der Zylinderkatode 6, beziehungsweise der Membran 7 in Kontakt, was insbesondere aus den Figuren 2 und 3 hervorgeht. Sowohl die Wechselstromelektroden 10 als auch die Anoden 8 sind an der Innenfläche des Metallgehäuses 1 angeordnet.

Die vorgeschlagene Konstruktion ermöglicht die Verwendung von zwei Elektrolyseverfahren gleichzeitig bei der Verarbeitung von Rohstoffen, die als ein Verfahren zusammenwirken können. Zum einen ein Verfahren mit Wechselstrom, insbesondere mit einer variierenden Frequenz, welches effektiv, insbesondere passive Formen von, Platinoiden (Platingruppenmetall-(ionen)) löst. Zum anderen ein Verfahren mit Gleichstrom, welches besonders geeignet ist, Platinioidionen aus der Lösung an der Kathode abzuscheiden.

Bei dieser Überlagerung (Überschneidung) von zwei unabhängigen Prozessen der Elektrolyse mit mindestens einem Gleich- und mindestens einem Wechselstrom unter Bedingungen von vorzugsweise erzwungener, kontinuierlicher und möglichst vollständiger Rekondensation des Elektrolyten führt zu einem Endergebnis besonderes hoher Prozessgeschwindigkeit und besonders großer Platinrückgewinnung.

Es ist darauf hinzuweisen. Dass die Überlagerung der Elektrolyseprozesse mit Gleich- und Wechselstrom, nicht mit einem Verfahren zu verwechseln ist, bei welchem die unterschiedlichen Ströme aus derselben Stromquelle oder über dieselben Elektroden bereitgestellt werden.

Durch den voranstehend beschriebenen Aufbau wird ein Autoklav-Elektrolysebehälter bereitgestellt, welcher die Gewinnung von Platingruppenmetallen vereinfacht und gleichzeitig die Effizienz und Umweltfreundlichkeit des Prozesses erhöht.

Der gesamte Prozess (Auflösung und Ausfällung von Platinoiden) findet in einer Vorrichtung statt.

Die Extraktion von Platinoiden aus dem Rohmaterial unter den Bedingungen eines stationären Kontakts zwischen Rohmaterial und Elektrolyt (d.h. ohne Pumpen des Elektrolyten und Mischen der Rohmaterialien) bei geringem Elektrolytvolumen (Startvolumenverhältnis Festphase/Flüssigphase 1-2 / 1 und während des Prozesses durch Verdampfung des Elektrolyten erhöht) bei gleichzeitiger (Elektrolyt-) Regeneration durch Verdampfung-Kondensation (Möglichkeit der wiederholten Verwendung) ist in dieser Form nicht bekannt.

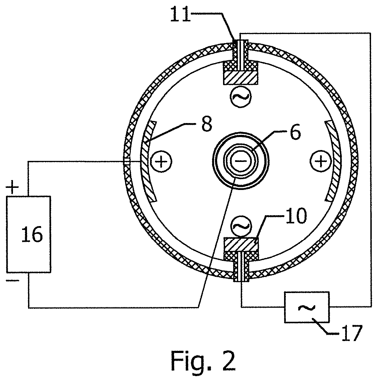

In Fig. 2 ist der Anordnungsplan der Elektroden (Oberansicht) für diese Ausführungsvariante der Anlage dargestellt. Dabei bedeuten
8 - Anodenplatten,
10 - Wechselstromelektroden,
6 - Zentralkathode in der Kassette,
11 - Kontaktblock,
16 - Gleichstromquelle,
17 - Wechselstromquelle.

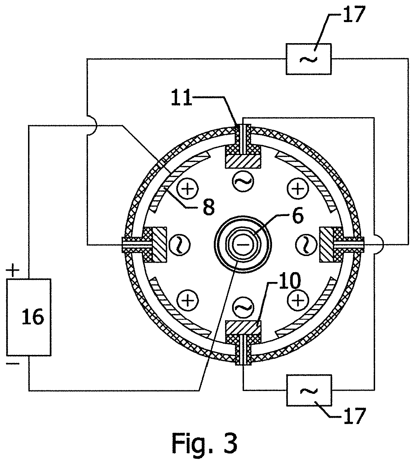

In Fig. 3 ist die Variante der Anlage mit zwei Paaren von Wechselstromelektroden und vier Anodenplatten dargestellt (Anordnungsplan der Elektroden, Oberansicht). Dabei bedeuten
8 - Anodenplatten,
10 - Wechselstromelektroden,
6 - Zentralkathode in der Kassette,
11 -Kontaktblock,
16 - Gleichstromquelle,
17 - unabhängige Wechselstromquellen.

Die vorgeschlagene Anlage funktioniert wie folgt. Der Raum zwischen den Elektroden wird mit zu verarbeitendem Material beladen, das PGM enthält. Die Anlage wird mit dem Elektrolyten auf der Basis von Salzsäure gefüllt. Das Ventil 12 wird geschlossen. Danach findet mittels Wechselstromquellen 17 das Anheizen des Elektrolyten durch den direkten Wechselstromdurchfluss zwischen den Elektroden 10 bis zu der erforderlichen Temperatur und dem erforderlichen Druck des Verfahrens statt (Fig. 2 und Fig. 3). Der vollständige Vorgang der PGM-Gewinnung aus dem keramischen Träger (Rohstoff) in den Elektrolyten wird nur bei Temperaturen über 100°C erreicht, also bei erhöhtem Druck und bei der höchsten Chlorkonzentration. Bei der Erreichung der maximalen Temperatur wird der Gleichstrom der Quelle 16 in radialer Richtung mit der Freisetzung von atomaren Chlor auf den Anoden 8 zugeführt . Die Überlagerung des Wechsel- und Gleichstroms der unabhängigen Stromquellen führt bei Vorliegen des aktiven Oxidationsmittels (atomaren Chlors) zu einer intensiven Freisetzung der wasserlöslichen Formen der Platinmetalle in den Elektrolyten aus der Fläche des Rohstoffs. Gleichzeitig findet die Freisetzung des angereicherten Konzentrats der Platinmetalle auf der Kathode 6 statt (Fig. 2 und Fig. 3). Bei erhöhter Temperatur findet die Vaporisation des Elektrolyten statt. Bei der periodischen Öffnung des Ventils 12, das auf dem Stutzen 13 platziert ist, kommen die Elektrolysedämpfe in den absteigenden Kühler 14 und werden im Speicherbehälter 15 kondensiert (Fig. 1). Es wird regenerierter Elektrolyt für den Wiedereinsatz gebildet. Die Vaporisation des Elektrolyten führt zur Reduzierung seines Stands im Raum zwischen den Elektroden und gleichzeitig zur Steigerung der Konzentration der Platinmetalle im Elektrolyten, was zu einer Intensivierung der Kinetik der Freisetzung der Platinmetalle auf der Kathode führt. Das Verfahren wird bis zur vollständigen Vaporisation des Elektrolyten und zu seinem Umkondensieren im Speicherbehälter geführt.

Bei Bedarf kann das Verfahren bei Luftdruck durchgeführt werden. In diesem Fall wird das Ventil (12) nicht geschlossen, und die Vaporisation des Elektrolyten bei der erhöhten Temperatur und seine Kondensation werden in natürlicher Weise oder im Schnelllauf durch die Zwangsentleerung der Dämpfe mit der chemischen Pumpe durchgeführt.

Bei der Bearbeitung des Rohstoffs in Form von metallischen Konzentraten der Platinmetalle auf der Basis von Eisen und Kupfer werden die Verfahren in gleicher Weise durchgeführt. Voraussetzung dafür ist die Anpassung des Gehalts der Salzsäure in der Wasserlösung. Das Verfahren wird mit der gleichzeitigen Freisetzung des atomaren Chlors auf der Anode und der Erhöhung der Sauerstoffkonzentration durchgeführt. Das führt zu der Passivierung der Platinmetalle und zum aktiven Chlorieren der Basis (Kupfer und Eisen). In diesem Fall werden Kupfer und Eisen auf der Kathode freigesetzt, und das Konzentrat der Platinmetalle wird im Schlammstoff am Boden der Anlage gesammelt. Das Vorhandensein von Wechselstrom bei dem Rohstoff mit der erhöhten Leitungsfähigkeit führt zu einer konstanten Wechselpolarisation des Rohstoffs und zu seiner intensiven Lösung im Elektrolyten.

Alle oben angeführten Vorteile des angemeldeten Autoklav-Elektrolysebehälters machen die Anlage effizient für industrielles Einsetzen.

### Analogielösungen [1, 2]

1. Upadhyay A. K., Jae-chun Lee, Eun-young Kim, Min-seuk Kim, Byung-Su Kim, Vinay Kumar. « Leaching of platinum group metals (PGMs) from spent automotive catalyst using electro generated chlorine in HCl solution». Journal of Chemical Technology and Biotechnology. 2013. Vol. 88, No. 11. p. 1991-1999.
2. Min-seuk Kim and other «A novel zero emission concept for electrogenerated chlorine leaching its application to extraction of platinum group metals from spent automotive catalyst» Hydrometallurgy, 159 (2016), p19-27.
3. Analogielösung [3]
   Konik K.P. u. a. "Elektrochlorgerät für Auflösung des Rohplatins". Buntmetalle, 12, 2016
4. Analogielösung [4]
   Tschernyschewa O.W., Tschernyschew W.I. "Gewinnung des Rheniums und des Platins aus den verarbeiteten Katalysatoren der Erdölverarbeitung mit der Methode der elektrochemischen Hydrochlorierung" Buntmetalle, 1, 2013,
5. Prototyp [5]
   W.I. Maximow "Elektrochloration als Methode der komplexen Metallgewinnung" Staatlicher wissenschaftlich-technischer Verlag der Literatur für Eisen- und Buntmetallurgie, Moskau 1955.

## Patentansprüche

1. Autoklav-Elektrolysebehälter für die Platingruppen-Metallgewinnung aus verbrauchten Katalysatoren und anderen Recyclingteilen, die Edelmetalle enthalten, mit einem Metallgehäuse (1), in welchem eine koaxial positionierte perforierte Zylinderkathode (6) in einer Kathodenkassette mit einer Membran (7) angeordnet ist,
**dadurch gekennzeichnet,**
**dass** das Metallgehäuses (1) eine Außenfläche aufweist, welche mit einer wärme- und spannungsisolierten Ummantelung ausgebildet ist (4), dass auf der Innenfläche des Metallgehäuses (1) Gleichstrom-Anoden (8) angeordnet sind, die gleichzeitig als Schutzanoden dienen, dass gleichzeitig auf der Innenfläche des Metallgehäuses (1) isolierte Wechselstromelektroden (10) paarweise platziert sind, die isoliert sind und dass ein oberer, vom Metallgehäuse (1) isolierter Bereich des Autoklav-Elektrolysebehälters, ein vom Metallgehäuse (1) stromisolierte Oberdeckel (2), ein Ventil (12) aufweist, das durch Stutzen mit einem absteigenden Kühler (14) für eine Destillation und Kondensation des Elektrolyten mit einem Speicherraum (15) für den Elektrolyten verbunden ist.

2. Autoklav-Elektrolysebehälter nach Anspruch 1,
**dadurch gekennzeichnet,**
**dass** jeweils eine Elektrode von jedem Paar der Wechselstromelektroden (10) auf diametral gegenüberliegenden Seiten in dem Gehäuse angeordnet ist und die Elektroden vertikal angeordnet sind.

3. Autoklav-Elektrolysebehälter nach einem der Ansprüche 1 oder 2,
**dadurch gekennzeichnet,**
**dass** die Anzahl der Paare der Wechselstromelektroden (10) höchstens zwei beträgt.

4. Autoklav-Elektrolysebehälter nach einem der Ansprüche 1 bis 3,
**dadurch gekennzeichnet,**
**dass** die Gleichstrom-Anoden paarweise angeordnet sind.

5. Autoklav-Elektrolysebehälter nach einem der Ansprüche 1 bis 4,
**dadurch gekennzeichnet,**
**dass** jedes Paars von Gleichstrom-Anoden (8) Titanplatten aufweist, welche vertikal angeordnet und diametral zueinander ausgerichtet sind und zwischen den Wechselstromelektroden (10) an einem Innenumfang der Innenseite des Metallgehäuses (1) liegen.

6. Autoklav-Elektrolysebehälter nach einem der Ansprüche 1 bis 5,
**dadurch gekennzeichnet,**
**dass** die Anzahl der ausgewählten Paare der Gleichstrom-Anoden (8) nicht mehr als zwei beträgt.

7. Autoklav-Elektrolysebehälter nach einem der Ansprüche 1 bis 4,
**dadurch gekennzeichnet,**
**dass** die Titanplatten mit einer Beschichtung gebildet sind, welche Ruthenium-, Titan- und/oder Iridium-Oxide aufweist.

## Claims

1. An autoclave electrolyte container for platinum group metal recovery from used catalytic converters and other recyclable parts that contain noble metals, having a metal housing (1) in which a coaxially positioned perforated cylindrical cathode (6) is located in a cathode cassette having a membrane (7),
***characterized in that***
the metal housing (1) has an outer surface which is embodied with a heat- and tension-insulated sheathing (4); that direct current anodes (8) are located on the inner surface of the metal housing (1), which anodes simultaneously serve as sacrificial anodes; that simultaneously on the inner surface of the metal housing (1), isolated alternating current electrodes (10) are placed in pairs, which alternating current electrodes are insulated; and that an upper region of the autoclave electrolyte container, which is insulated from the metal housing (1), has an upper lid (2), electrically insulated from the metal housing (1), has a valve (12), which is joined by connectors to a descending radiator (14) for distillation and condensation of the electrolytes, the radiator having a storage chamber (15) for the electrolytes.

2. The autoclave electrolyte container of claim 1,
***characterized in that***
one electrode of each pair of alternating current electrodes (10) is located on diametrically opposite sides in the housing, and the electrodes are arranged vertically.

3. The autoclave electrolyte container of one of claims 1 or 2,
***characterized in that***
the number of pairs of the alternating current electrodes (10) amounts to no more than two.

4. The autoclave electrolyte container of one of claims 1 through 3,
***characterized in that***
the direct current anodes are arranged in pairs.

5. The autoclave electrolyte container of one of claims 1 through 4,
***characterized in that***
each pair of direct current anodes (8) has titanium plates, which are arranged vertically and oriented diametrically to one another and are located between the alternating current electrodes (10) on an inner circumference of the inner surface of the metal housing (1).

6. The autoclave electrolyte container of one of claims 1 through 5,
***characterized in that***
the number of selected pairs of the direct current anodes (8) amounts to no more than two.

7. The autoclave electrolyte container of one of claims 1 through 4,
***characterized in that***
the titanium plates are formed with a coating, which has ruthenium oxide, titanium oxide, and/or iridium oxide.

## Revendications

1. Electrolyeur autoclave pour la récupération de métaux groupe platine fait de catalyseurs utilisés et d'autres parties recyclées contenant des métaux nobles muni d'un boîtier métallique (1) où une cathode cylindrique coaxiale positionnée perforée (6) est disposée au sein d'une cassette cathodique avec un membrane (7) caractérisé de la sorte que le boîtier métallique (1) présente une surface extérieure formée d'une gaine isolante la chaleur et la tension (4), que sur la surface intérieure du boîtier métallique (1) des anodes à courant continu (8) sont disposées qui servent par la même occasion d'anodes protectrices, que par la même occasion sur la surface intérieure du boîtier métallique (1) des électrodes isolantes à courant alternatif (10) sont placées par paire qui sont isolantes et qu'une plage supérieure isolante du boîtier métallique (1) de l'électrolyeur autoclave présente un couvercle supérieure isolant le courant (2) du boîtier métallique (1) présentant un ventilateur (12) relié par des tubulures via un refroidisseur décroissant (14) en vue d'une distillation et d'une condensation de l'électrolyte équipé d'un espace de stockage (15) pour les électrolytes.

2. Electrolyeur autoclave selon la revendication 1 est caractérisé de sorte qu'une électrode respective est disposée de chaque paire des électrodes à courant alternatif (10) sur des côtés diamétralement opposés dans le boîtier et que les électrodes sont disposés à titre verticale.

3. Electrolyeur autoclave selon la revendication 1 ou 2 est caractérisé de sorte que le nombre des paires des électrodes à courant alternatif (10) s'élève au maximum à deux.

4. Electrolyeur autoclave selon l'une des revendications 1 jusqu'à 3 est caractérisé de sorte que les anodes à courant continu sont disposées par paires.

5. Electrolyeur autoclave selon l'une des revendications 1 jusqu'à 4 est caractérisé de sorte que chacune des paires des anodes à courant continu (8) présente des plaques de titane qui sont disposées à titre verticale et orientées diamétralement les unes aux autres se situent entre les électrodes à courant alternatif (10) à la périphérie intérieure du côté intérieur du boîtier métallique (1).

6. Electrolyeur autoclave selon l'une des revendications 1 jusqu'à 5 est caractérisé de sorte que le nombre des paires sélectionnées des anodes à courant continu (8) ne s'élève pas à plus de deux.

7. Electrolyeur autoclave selon l'une des revendications 1 jusqu'à 4 est caractérisé de sorte que les plaques de titane sont formées d'un revêtement présentant du ruthénium, du titane, et/ou de l'oxyde d'iridium.
